Europäisches Patentamt

European Patent Office

Office européen des brevets

(11) Numéro de publication: **0 188 144**

A1

## (12) DEMANDE DE BREVET EUROPEEN

(21) Numéro de dépôt: **85402352.0**

(22) Date de dépôt: **29.11.85**

(51) Int. Cl.⁴: **B 62 D 6/02**

(30) Priorité: **03.12.84 FR 8419091**

(43) Date de publication de la demande:
**23.07.86 Bulletin 86/30**

(84) Etats contractants désignés:
**DE GB IT**

(71) Demandeur: **AUTOMOBILES PEUGEOT**
**75, avenue de la Grande Armée**
**F-75116 Paris(FR)**

(71) Demandeur: **AUTOMOBILES CITROEN**
**62 Boulevard Victor-Hugo**
**F-92200 Neuilly-sur-Seine(FR)**

(72) Inventeur: **Hoekman, Didier**
**64, Square Ronsard**
**F-77350 Le Mee S/Seine(FR)**

(74) Mandataire: **Boivin, Claude**
**9, rue Edouard-Charton**
**F-78000 Versailles(FR)**

(54) **Direction assistée hydraulique de véhicule automobile, à vanne rotative.**

(57) Direction assistée hydraulique pour véhicule automobile comprenant un arbre de commande (2), un arbre suiveur (3), dont une extrémité est solidaire d'un pignon (4) en prise avec la crémaillère de direction (5) et dont l'autre extrémité est reliée mécaniquement avec un jeu à l'arbre de commande (2), une vanne (17-21), propre à mettre un vérin d'assistance agissant sur la crémaillère (5) en communication, soit avec une source de pression hydraulique, soit avec l'échappement selon le sens de l'écart angulaire entre les deux arbres et comportant une came (11) agissant sur un piston (32) à l'encontre de moyens élastiques (40) et une pression hydraulique.

La vanne se compose d'un tiroir rotatif (21) pivotant dans une chemise rotative (17), la chemise (17) étant solidaire en rotation de l'un des deux arbres préférentiellement l'arbre de commande (2), et le tiroir (21) de l'autre arbre préférentiellement l'arbre suiveur (3).

./...

FIG. 2

- 1 -

La présente invention concerne une direction assistée hydraulique pour véhicule automobile du genre de celles qui comprennent un arbre de commande, un arbre suiveur, dont une extrémité est solidaire d'un pignon en prise avec la crémaillère de direction et dont l'autre extrémité est reliée mécaniquement avec un jeu à l'arbre de commande, une vanne propre à mettre un vérin d'assistance agissant sur la crémaillère en communication, soit avec une source de pression hydraulique, soit avec l'échappement selon le sens de l'écart angulaire entre les deux arbres et comportant une came agissant sur un piston à l'encontre de moyens élastiques et d'une pression hydraulique.

Afin de loger la vanne, ses moyens de commande et les moyens de rappel asservi dans le boîtier de la crémaillère, il est nécessaire de miniaturiser les moyens de commande de la vanne et d'imbriquer les moyens de rappel asservi.

La direction assistée selon l'invention est caractérisée en ce que la vanne se compose d'un tiroir rotatif pivotant dans une chemise rotative, la chemise étant solidaire en rotation de l'un des deux arbres préférentiellement l'arbre de commande, et le tiroir de l'autre arbre préférentiellement l'arbre suiveur.

La vanne comporte avantageusement des moyens pour que tout déplacement relatif dans un sens ou dans l'autre de la chemise par rapport au tiroir au-delà d'une position d'équilibre engendre un déplacement subséquent du piston et de la crémaillère de telle sorte que le tiroir reprenne la position d'équilibre par rapport à la chemise.

Les moyens de rappel asservi peuvent être constitués par une came couronne à engrènement interne solidaire en rotation de l'arbre de commande et agissant sur un piston à l'encontre de moyens élastiques et hydrauliques.

On a décrit ci-après, à titre d'exemple non limitatif, un mode de réalisation de la direction asservie selon la présente invention, avec référence aux dessins annexés dans lesquels :

La Figure 1 représente une vue en élévation;

La Figure 2 représente une coupe selon II-II de la Figure 1;

La Figure 3 représente une coupe suivant III-III de la Figure 1;

La Figure 4 représente une coupe selon IV-IV de la Figure 1;

La Figure 5 représente une coupe selon V-V de la Figure 3;

La Figure 6 représente une coupe selon VI-VI de la Figure 5;

La Figure 7 représente une demi-coupe selon VII de la Figure 2.

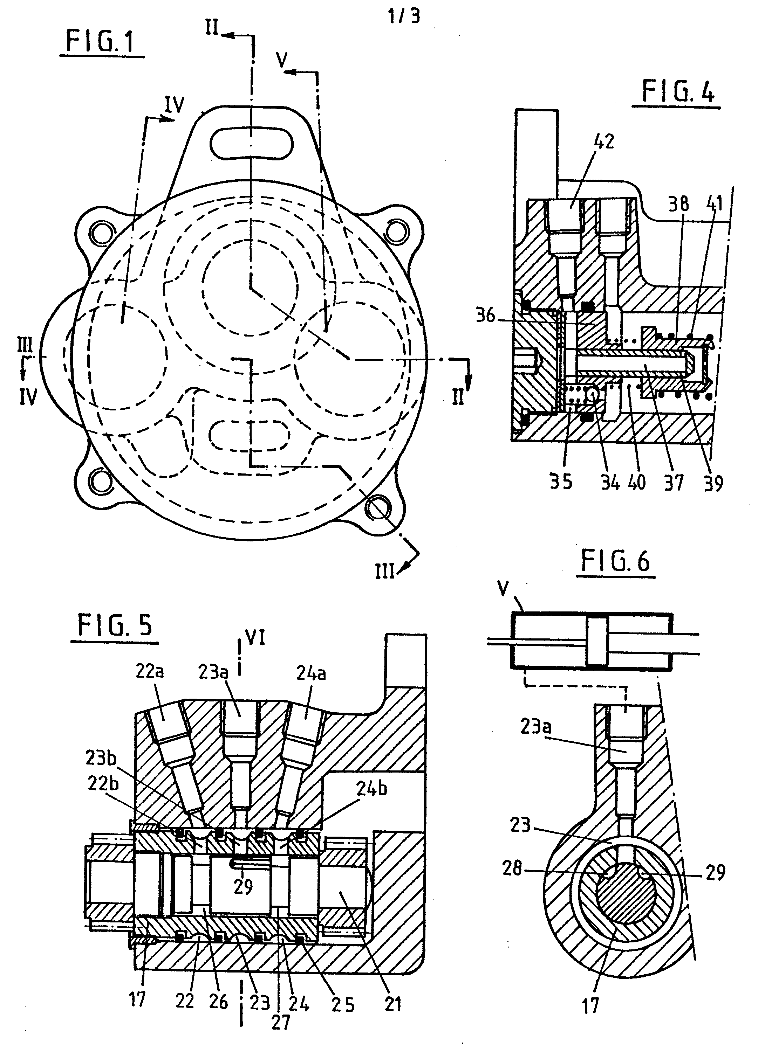

On voit sur la Figure 2 un boîtier 1 dans lequel sont montés à rotation un arbre de commande 2 et un arbre suiveur 3 coaxial à l'arbre 2 et portant un pignon 4; celui-ci est en prise avec une crémaillère 5 solidaire de l'élément mobile d'un vérin d'assistance V (voir Figure 6) et reliée à la timonerie de direction.

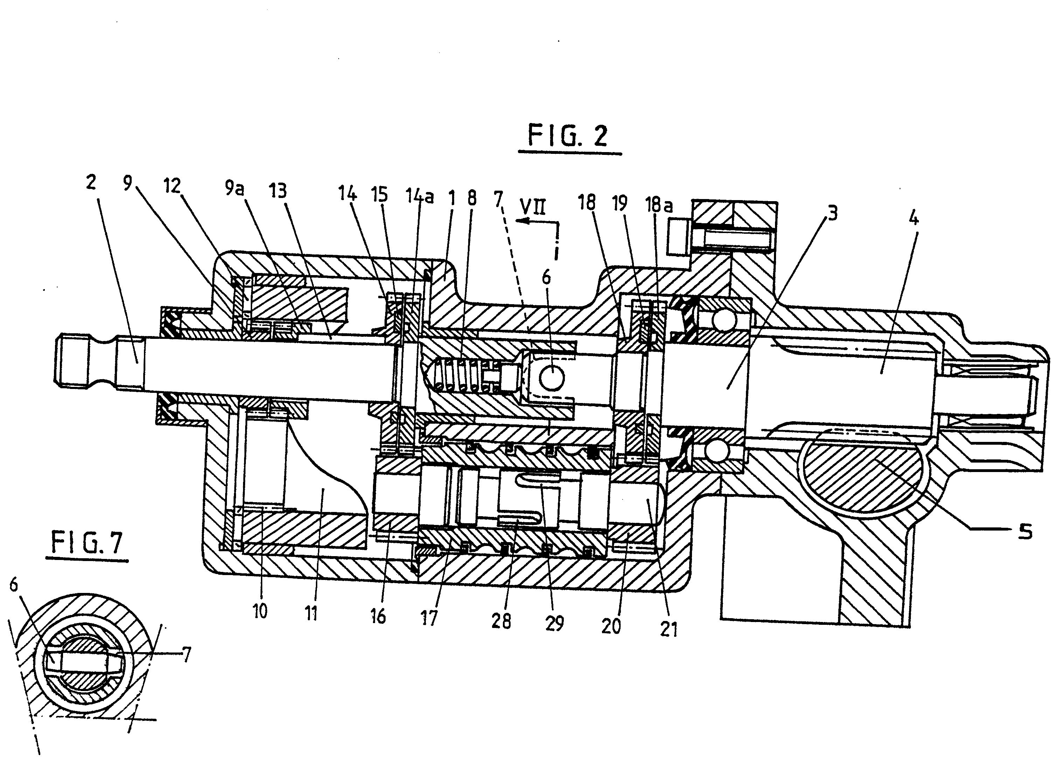

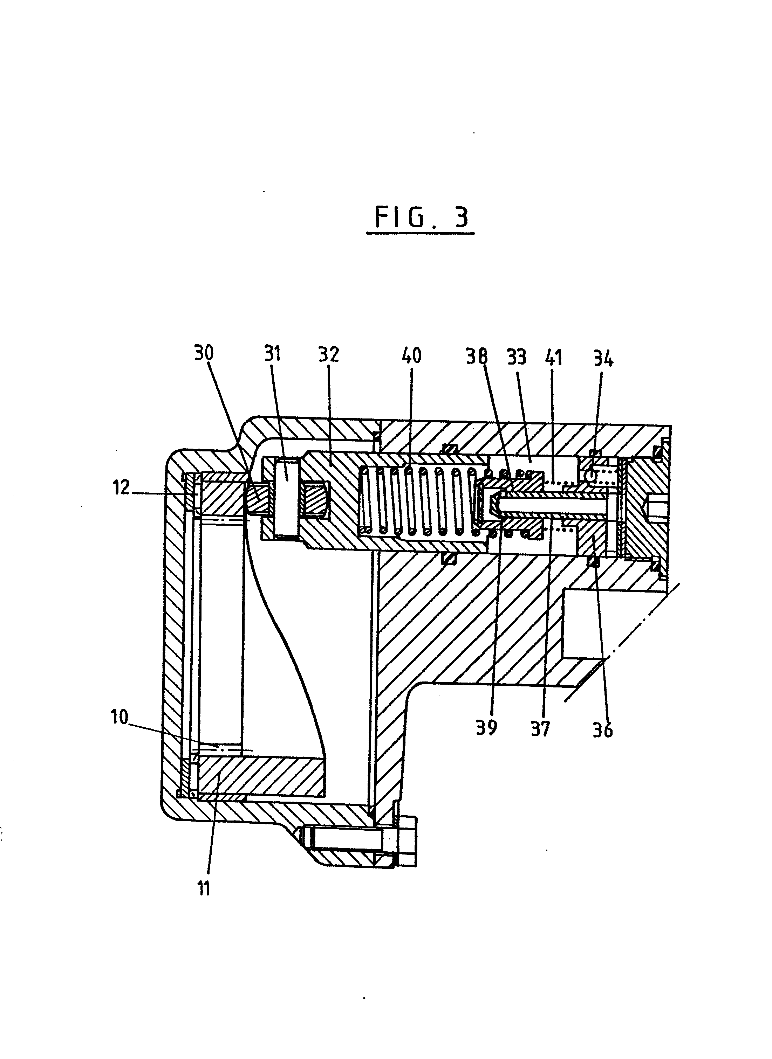

L'arbre de commande 2 et l'arbre suiveur 3 sont reliés par une goupille 6, avec un jeu 7 (voir Figure 7) de telle sorte que les deux arbres sont indépendants l'un de l'autre, l'arbre 2 pouvant néanmoins entraîner l'arbre 3 en cas de défaillance du système d'assistance.

Les deux arbres 2 et 3 sont mis en contrainte par un ressort 8 qui rattrape le jeu axial.

Sur l'arbre 2 est emmanché un pignon 9 qui engrène avec la denture interne 10 d'une came couronne 11, dont la face plane roule sur une butée à aiguilles 12. Un pignon 9a de rattrapage de jeu est relié à l'arbre 2 par une tige flexible 13; les extrémités de la tige flexible 13 sont engagées respectivement dans un trou borgne du pignon 9a, et dans un trou borgne d'un pignon 14 emmanché sur l'arbre 2. Au pignon 14 est associé un pignon 14a de rattrapage de jeu relié au pignon 14 par un ressort 15. Les pignons 14 et 14a engrènent avec un pignon 16 solidaire de la chemise 17 d'un distributeur.

Sur l'arbre 3 est emmanché un pignon 18 associé à un pignon 18a de rattrapage de jeu et auquel il est relié par un ressort 19. Les pignons 18 et 18a engrènent avec un pignon 20 solidaire du tiroir rotatif 21 du distributeur.

La chemise 17 du distributeur comporte sur sa périphérie extérieure trois gorges 22,23,24. La gorge centrale 23 débouche dans un conduit 23a percé dans le boîtier et relié au vérin V de la crémaillère. Les gorges externes 22 et 24 sont reliées de la même manière par des conduits 22a et 24a respectivement à la haute pression et à l'échappement. Les gorges sont séparées par des joints toriques à section carrée 25 d'étanchéité. Trois conduits radiaux 22b,23b,24b percés dans la chemise 17 relient les gorges à l'alésage axial de la chemise.

Le tiroir rotatif 21 comporte à sa périphérie extérieure

- 4 -

deux gorges annulaires 26 et 27 disposées vis à vis des conduits 22b et 24b. Les gorges 26 et 27 sont donc reliées en permanence respectivement à la haute pression et à l'échappement, indépendamment de la position relative angulaire du tiroir et de la chemise.

Le tiroir 21 comporte en outre deux rainures longitudinales 28 et 29. La rainure 28 débouche dans la gorge 26 et la rainure 29 dans la gorge 27. Selon la position relative du tiroir 21 et de la chemise 17, l'une ou l'autre des rainures 28 ou 29 peut se présenter vis à vis du conduit d'utilisation 23 et le relier ainsi à la haute pression ou à l'échappement.

Dans la position d'équilibre de la direction, le véhicule roulant en ligne droite, le conduit d'utilisation 23a est isolé, comme on le voit à la Figure 6. Quand l'arbre de commande 2 entraîne la chemise 17 dans un sens ou dans l'autre, le conduit d'utilisation 23a se trouve mis en liaison hydraulique avec la pression ou l'échappement par l'intermédiaire du conduit 22a ou 24a et de la rainure 28 ou 29. Il en résulte un déplacement de la crémaillère 5 par l'action du vérin qui a pour effet de faire pivoter les roues et en même temps replacer le tiroir 21 dans la position neutre entre les rainures 28 et 29.

La Figure 3 représente le dispositif de rappel asservi dont le principe est connu en soi. La came 11, qui est solidaire en rotation de l'arbre de commande 2 repousse en pivotant un galet 30 dont l'axe 31 est solidaire d'un piston 32; celui-ci est mobile dans une chambre 33 séparée par un clapet 34 d'une chambre 35 alimentée, par l'intermédiaire d'un conduit 42, par une pression qui dépend de la vitesse du véhicule et qui est donnée par un régulateur centrifuge non représenté (voir Figure 4). La direction est ainsi centrée sur sa position neutre, avec un couple de rappel qui est d'autant plus grand que la vitesse du véhicule est plus grande.

Le clapet 34 est monté dans un élément fixe 36 solidaire d'un gicleur 37 qui débouche dans la chambre 35. Sur le gicleur 37 peut déboucher une chemise 38 à l'intérieur de laquelle débouche l'ouverture 39 du gicleur. Deux ressorts 40 et 41 sont interposés entre la chemise 38 et respectivement le piston 32 et l'élément 36.

Quand le conducteur fait pivoter l'arbre 2, donc la came 11, le clapet 34 s'ouvre et l'huile est refoulée pendant que le ressort 40 se comprime et que la chemise 38 se déplace en libérant l'ouverture 39 du gicleur 37. Quand le conducteur lâche le volant, la pression chute rapidement dans la chambre 33 et le clapet 34 se referme; la chambre 33 est alors alimentée par le gicleur 37 qui freine le retour de la direction vers sa position neutre.

Revendications

1. Direction assistée hydraulique pour véhicule automobile comprenant un arbre de commande (2), un arbre suiveur (3), dont une extrémité est solidaire d'un pignon (4) en prise avec la crémaillère de direction (5) et dont l'autre extrémité est reliée mécaniquement avec un jeu à l'arbre de commande (2), une vanne (17-21), propre à mettre un vérin d'assistance agissant sur la crémaillère (5) en communication, soit avec une source de pression hydraulique, soit avec l'échappement selon le sens de l'écart angulaire entre les deux arbres et comportant une came (11) agissant sur un piston (32) à l'encontre de moyens élastiques (40) et une pression hydraulique, caractérisée en ce que la vanne se compose d'un tiroir rotatif (21) pivotant dans une chemise rotative (17), la chemise (17) étant solidaire en rotation de l'un des deux arbres préférentiellement l'arbre de commande (2), et le tiroir (21) de l'autre arbre préférentiellement l'arbre suiveur (3).

2. Direction assistée selon la revendication 1, caractérisée en ce que la chemise (17) comporte sur sa surface extérieure trois gorges (22,23 et 24) reliées à la source de pression, à l'utilisation (vérin de la crémaillère) et à l'échappement, et trois conduits radiaux (22b,23b et 24b) reliant les gorges à l'alésage axial de la chemise.

3. Direction assistée selon la revendication 2, caractérisée en ce que le tiroir (21) comporte sur sa surface extérieure deux gorges (26 et 27) situées dans les plans des gorges de pression et d'échappement de la chemise (17) ainsi que deux rainures longitudinales (28 et 29) reliant selon les positions relatives du tiroir et de la chemise l'utilisation à l'échappement ou à la source de pression.

4. Direction assistée selon la revendication 3, caractérisée en ce que les deux rainures (28 et 29) sont situées de part et d'autre d'une position d'équilibre par laquelle l'utilisation est isolée.

5. Direction selon l'une des revendications 1 à 4, caractérisée en ce que la came (11) est une came couronne à engrènement interne entraînée en rotation par l'arbre de commande (2).

FIG.1

FIG.4

FIG.5

FIG.6

# FIG. 2

# FIG.7

2/3

0188144

0188144

## FIG. 3

Office européen
des brevets

**RAPPORT DE RECHERCHE EUROPEENNE**

0188144
Numéro de la demande

EP 85 40 2352

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | LU-A- 45 004 (CITROEN) <br> * Revendications; figures 1,2 * | 1 | B 62 D 6/02 |
| A | FR-A-2 132 948 (CITROEN) | | |
| A | FR-A-2 448 677 (SOCIETE NOUVELLE DE ROULEMENTS) | | |

DOMAINES TECHNIQUES
RECHERCHES (Int. Cl.4)

B 62 D

Le présent rapport de recherche a été établi pour toutes les revendications

| Lieu de la recherche | Date d'achèvement de la recherche | Examinateur |
|---|---|---|
| LA HAYE | 27-02-1986 | PIRIOU J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82